(19) Europäisches Patentamt
European Patent Office
Office européen des brevets

(11) **EP 4 787 230 A1**

(12) **EUROPEAN PATENT APPLICATION**

(43) Date of publication:
**05.08.2026 Bulletin 2026/32**

(21) Application number: **25305121.3**

(22) Date of filing: **29.01.2025**

(51) International Patent Classification (IPC):
*G06N 3/045* (2023.01)   *G06T 9/00* (2006.01)
*H04N 19/176* (2014.01)   *H04N 19/46* (2014.01)
*H04N 19/96* (2014.01)

(52) Cooperative Patent Classification (CPC):
G06N 3/045; G06N 3/0455; G06N 3/047;
G06N 3/084; G06N 3/088; G06T 9/002

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **SCHNITZLER, Francois
56890 SAINT AVE (FR)**

• **LE MEUR, Olivier
35160 TALENSAC (FR)**
• **GALPIN, Franck
35235 THORIGNE-FOUILLARD (FR)**
• **LAMBERT, Anne
35250 SAINT-AUBIN-D'AUBIGNE (FR)**
• **DAMODARAN, Bharath Bhushan
56000 VANNES (FR)**
• **CHEN, Ya
35700 RENNES (FR)**

(74) Representative: **Vossius & Partner
Patentanwälte Rechtsanwälte mbB
Siebertstraße 3
81675 München (DE)**

(54) **HYBRID INR WITH MULTIPLE SYNTHESIS NETWORKS**

(57)   **In** one implementation, a method of decoding a signal comprises: decoding information indicating partitioning of the signal into a plurality of partitions; for each partition of the plurality of partitions: decoding information indicating association of the partition to a respective processing model of a plurality of processing models; decoding latent variables; processing the latent variables based on the respective processing models to form processed latent variables; and reconstructing the signal from the processed latent variables. At the encoder side, a method comprises: encoding information indicating partitioning of the signal into a plurality of partitions; for each partition of the plurality of partitions: encoding information indicating association of the partition to a respective processing model of a plurality of processing models; obtaining latent variables associated with coordinates of samples of the signal; encoding the latent variables; and encoding model parameters for the plurality of processing models.

FIG. 11A

**Description**

**BACKGROUND**

The present application is related to neural compression.

Neural compression or learning-based compression is the application of neural networks and other machine learning methods to data compression. Those techniques are currently being investigated by MPEG, and there is a new ad-hoc group which focuses on the Implicit Neural Representation-based compression (INR-based) within Working Group 4. Typically, INR-based compression techniques have a far lower computational complexity than end-to-end neural compression approaches.

**BRIEF SUMMARY**

Briefly stated, in one embodiment, a method of decoding a signal is presented, comprising: decoding information indicating partitioning of the signal into a plurality of partitions; for each partition of the plurality of partitions: decoding information indicating association of the partition to a respective processing model of a plurality of processing models; decoding latent variables; processing the latent variables based on the respective processing models to form processed latent variables; and reconstructing the signal from the processed latent variables.

According to another embodiment, a method of encoding a signal is presented, comprising: encoding information indicating partitioning of the signal into a plurality of partitions; for each partition of the plurality of partitions: encoding information indicating association of the partition to a respective processing model of a plurality of processing models; obtaining latent variables associated with coordinates of samples of the signal; encoding the latent variables; and encoding model parameters for the plurality of processing models.

According to another embodiment, an apparatus for decoding a signal is presented, comprising one or more processors and at least one memory coupled to the one or more processors, wherein the one or more processors are configured to: decode information indicating partitioning of the signal into a plurality of partitions; for each partition of the plurality of partitions: decode information indicating association of the partition to a respective processing model of a plurality of processing models; decode latent variables; process the latent variables based on the respective processing models to form processed latent variables; and reconstruct the signal from the processed latent variables.

According to another embodiment, an apparatus for encoding a signal is presented, comprising one or more processors and at least one memory coupled to the one or more processors, wherein the one or more processors are configured to: encode information indicating partitioning of the signal into a plurality of partitions; for each partition of the plurality of partitions: encode information indicating association of the partition to a respective processing model of a plurality of processing models; obtain latent variables associated with coordinates of samples of the signal; encode the latent variables; and encode model parameters for the plurality of processing models.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 illustrates a block diagram of a system within which aspects of the present embodiments may be implemented;
FIG. 2 illustrates a diagram of an example INR network;
FIG. 3 illustrates a block diagram of an example video encoder;
FIG. 4 illustrates a block diagram of an example video decoder;
FIG. 5 illustrates a hybrid INR network;
FIG. 6 illustrates an example video encoder applying a hybrid INR network;
FIG. 7 illustrates an example video decoder applying a hybrid INR network;
FIG. 8 illustrates prediction of a latent variable distribution, using a spatial context;
FIG. 9 illustrates an example video encoder applying a predictive hybrid INR network;
FIG. 10 illustrates an example video decoder applying a predictive hybrid INR network;
FIGs. 11A, 11B and 11C illustrate a hybrid INR with multiple synthesis networks, according to an embodiment;
FIG. 12 illustrates a method of encoding a signal, according to an embodiment;
FIG. 13 illustrates a method of decoding a signal, according to an embodiment; and
FIG. 14 illustrates a method where the decoded latent features can be used to decode the signal as in the COOL-CHIC algorithm, according to an embodiment.

**EP 4 787 230 A1**

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

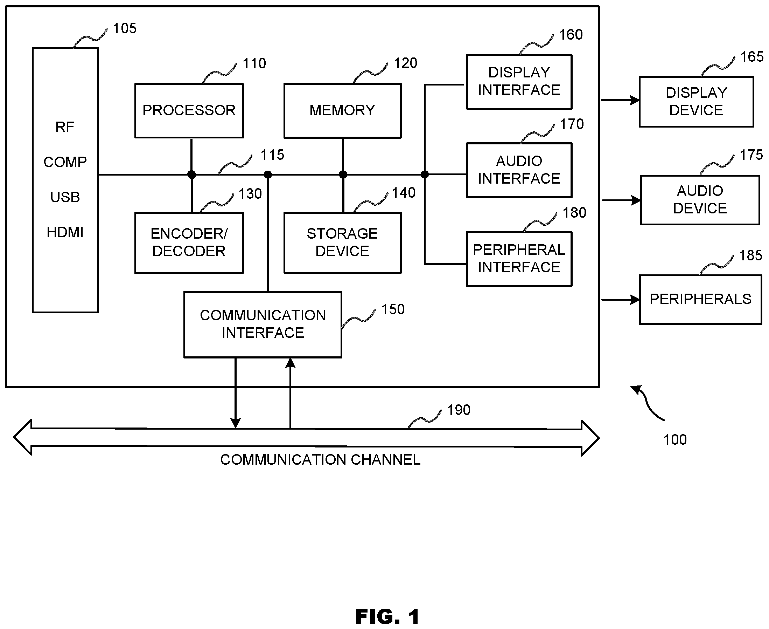

Referring to the drawings, there is shown in FIG. 1 a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, JPEG Pleno, MPEG-I, HEVC, or VVC.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the datastream as necessary for presentation on an output device.

Various elements of system 100 may be provided within an integrated housing. Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802. 11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

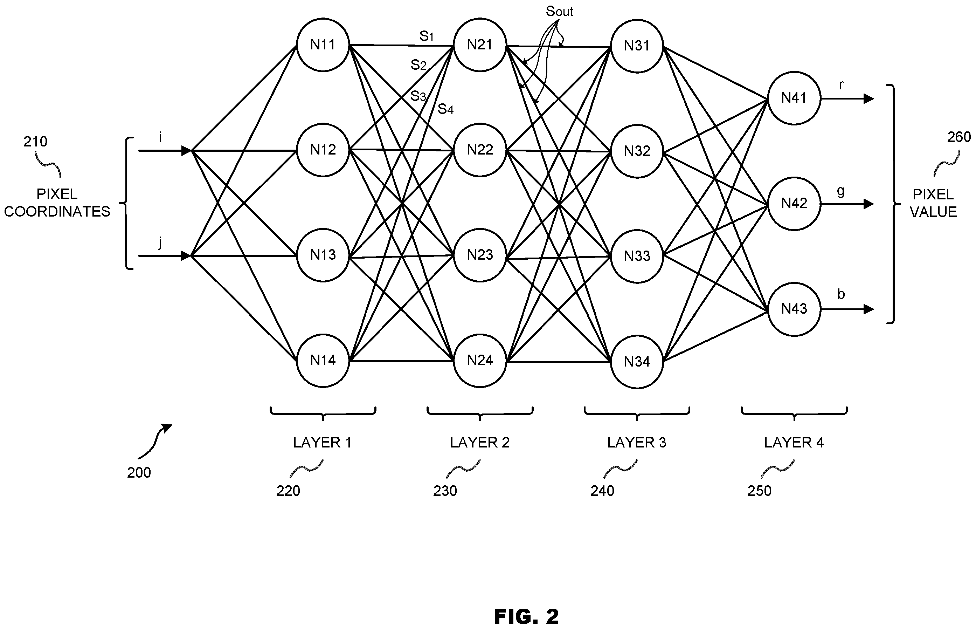

FIG. 2 is a diagram illustrating an example INR network 200. An INR network is a neural network composed of multiple layers, each layer includes multiple nodes (denoted by circles). Generally, the architecture of a neural network is characterized by the number of layers, the number of layers' nodes, and by the way the layers' nodes are connected. In the example of FIG. 2, the network 200 has four layers 220, 230, 240, 250 that are fully connected. For example, the first layer 220 includes four nodes N11, N12, N13, and N14 that each receives the coordinate values $(i, j)$ 210 of a pixel x and each outputs an output signal that, in turn, feeds the nodes of the next layer, N21, N22, N23, and N24. Likewise, the second layer 230 includes four nodes N21, N22, N23, and N24, that each receives the output signals of nodes from the previous layer, N11, N12, N13, and N14, and each outputs an output signal that, in turn, feeds the nodes of the next layer, N31, N32, N33, and N34. The fourth layer 250 includes three nodes N41, N42, and N43 that each receives the output signals of the nodes from the previous layer, N31, N32, N33, N34 and each outputs a color component value 260 of the pixel x, respectively, $r$, $g$, and $b$ (or color component values of any other color model, such as $y$, $u$, and $v$).

Each node in the network 200 represents an operator that generates an output signal based on the node's inputs. For example, node N21 of the second layer 230 receives as an input the output signals of nodes N11, N12, N13, and N14, respectively, $s_1$, $s_2$, $s_3$, and $s_4$. These inputs are translated into an output signal $s_{out}$ that feeds the nodes of the third layer 240. A node's operator can be expressed as follows:

$$s_{out} = A(p_0 + \sum_{i=1}^{L} p_i \cdot s_i), \qquad\qquad (1)$$

where, $L$ denotes the number of input signals (i.e., the number of nodes from the previous layer that connect to the node), $s = \{s_i : i = 1\ to\ L\}$ denotes the node's input signal vector, $s_{out}$ denotes the node's output signal, $p = \{p_i : i = 0\ to\ L\}$ denotes the node's parameter vector (or weight vector), and $A$ denotes an activation function (e.g., ReLU, Sigmoid, or Tanh). The weight vectors (and parameters of the activation functions, if such parameters exist) of respective nodes are collectively referred to as the parameters $\theta$ of the network 200. These parameters $\theta$ are determined through a training process. The network operation, denoted by $f_\theta$, is therefore defined by the network parameters $\theta$.

Hence, an INR network 200 is trained to predict a pixel value of an image, $x(i, j)$, based on the pixel's coordinates $(i, j)$ - that is, $f_\theta(i, j) = (r, g, b)$ (or $f_\theta(i, j) = (y, u, v)$). During a training phase of an INR network 200, the parameters $\theta$ (or a subset of them) are determined. This is done via an optimization process through which the parameters $\theta$ that minimize a cost function can be determined. For example, the following cost function can be used:

$$Cost = D(x, f_\theta) + \lambda R(\theta) \qquad\qquad (2)$$

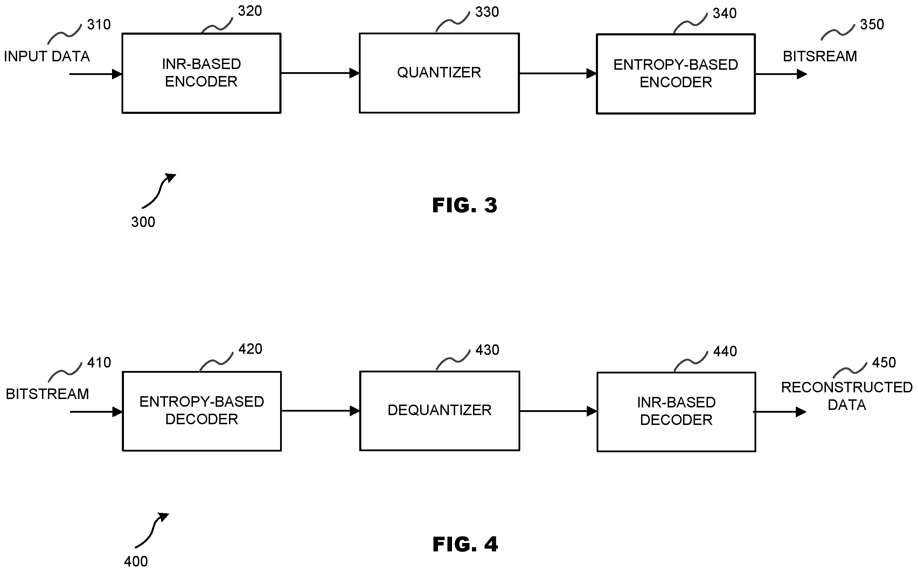

where, $D$ is a distortion measure, measuring the fidelity of the estimated pixel values, provided by $f_\theta$, relative to the ground truth, that is, the corresponding pixel values from the original image, denoted by $x$, and where $R$ is the resulting bitrate of the encoded parameters $\theta$ (e.g., encoded by quantization and entropy coding as discussed with respect to FIG. 3). A trade-off parameter $\lambda$ can be set to determine the balance between $D$ and $R$. Note that the distortion measure $D$ can be any metric that measure the distance (or similarity) between the original image $x$ and its estimated version provided by $f_\theta$, such as a mean squared error metric or a learned perceptual image patch similarity (LPIPS) metric. For example, a mean squared error metric can be expressed as:

$$D_{MSE} = \frac{1}{WH}\sum_{i\in W, j\in H}(x(i, j) - f_\theta(i, j))^2, \qquad\qquad (3)$$

where, $W$ and $H$ are the width and height of the image $x$ that the INR network is trained to predict. The optimization of the network parameters $\theta$, according to equation (2), is typically performed by a machine learning optimization technique, applying, for example, a batch gradient descent algorithm. Following the training of the INR network 200 and using the optimal parameters $\theta$ (obtained via the optimization process), the INR network can be applied to predict a pixel value based on its corresponding coordinate values.

Using INR networks for the application of encoding and decoding images is further described with respect to FIGs. 3 and 4.

FIG. 3 is a block diagram of an example video encoder 300. In the example of FIG. 3, the video encoder 300 includes an INR-based encoder 320, a quantizer 330, and an entropy-based encoder 340. The INR-based encoder 320 receives an input data 310 to be coded. The input data 310 can be data associated with a frame of video (an image), a frame of a surface representation of an object, or a frame of volumetric data. To code the input data 310, the INR-based encoder 320 trains an INR network (e.g., the INR network 200 described herein). Specifically, based on the input data 310, the INR-based encoder 320 optimizes a cost function associated with the function $f_\theta$, representative of the INR network, to determine the optimal network parameters $\theta$. For example, for an input image with dimensions $W$ and $H$, $W$ times $H$ pairs of pixel coordinates $(i, j)$ and corresponding pixel values $x(i, j)$ can be used to train the INR network according to equation (2). The optimal parameters, generated by the INR-based encoder 320, are then quantized by the quantizer 330, and then the quantized parameters are entropy-coded, by the entropy-based encoder 340, into a bitstream 350. Alternatively, the optimal parameters, generated by the INR-based encoder 320, can be coded using neural compression codecs such as Neural Network Coding (NNC)/ ISO/IEC 15938-17 or MPEG-7 part 17. The bitstream 350 can be used by a decoder to reconstruct the input image 310, as described in reference to FIG. 4.

FIG. 4 is a block diagram of an example video decoder 400. The decoder 400 generally reverses the operation of the encoder 300 of FIG. 3. In the example of FIG. 4, the video decoder 400 includes an entropy-based decoder 420, a dequantizer 430, and an INR-based decoder 440. As illustrated, the decoder 400 receives the bitstream 410, (e.g., 350, generated by the encoder 300) and entropy-decodes therefrom the quantized INR network parameters. The dequantizer 430 is then employed to dequantize these quantized INR network parameters, resulting in a restored version of the INR network parameters to be provided to the INR-based decoder 440.

The INR-based decoder 440 applies the trained INR network, defined by the restored INR network parameters, to generate the reconstructed data 450. For example, to decode an input image, the INR-based decoder 440 uses the INR network to predict the value of (or to evaluate $f_\theta$ using the coordinates of) any pixel of the input image. Thus, the decoder 400 can be applied to: 1) reconstruct the whole encoded image 310; 2) to reconstruct only a region of the encoded image; or 3) to progressively reconstruct the encoded image. For example, at the encoder 300, an INR network may be trained to predict pixel values of an image with dimensions $W = 256$ by $H = 256$ based on the corresponding coordinates. At the decoder 400, pixel values of the image can be predicted by evaluating the trained INR network using: 1) the full coordinate set used for training, including all pairs of $i \in 0,1, ...,255$ and $j \in 0,1, ...,255$; 2) a subset of the full set, including coordinates from a region of the encoded image; or 3) a first subset of the full set, including coordinates that subsample the image (forming a low-resolution version of the encoded image) and then a second subset including the remaining coordinates. Any set of coordinates can be used to predict the corresponding pixel values, for example, in order to interpolate or to extrapolate the encoded image 310.

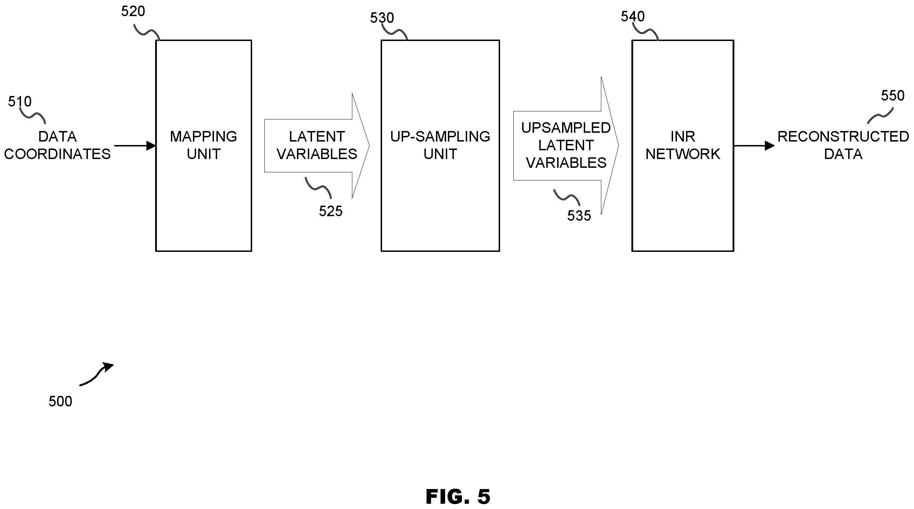

Hybrid INR networks have recently been applied to representing data, including images, videos, 3D objects, and volumetric data, among other applications. In a hybrid INR network, the data coordinates are first mapped into latent variables (or a feature vector). The latent variables are then used as input for the neural network. An example for a hybrid INR network is described in reference to FIG. 5.

FIG. 5 is a diagram illustrating a hybrid INR model 500. In an aspect, this hybrid INR model 500 can be applied by the INR-based encoder 320 of FIG. 3 and the INR-based decoder 440 of FIG. 4. In the example of FIG. 5, during the encoding of input data (that is, the training of the network 500), the input data's coordinates 510 are first mapped, by a mapping unit 520, into respective latent variables 525. The mapping can be implemented by a lookup table or a hash function, for example. The mapping may also involve a transformation, such as a Fourier transformation, a coordinate transformation, a normalization transformation, or a combination thereof. The latent variables 525 can be up-sampled, by an up-sampling unit 530, resulting in up-sampled latent variables 535. The up-sampled latent variables are used as an input to an neural network 540 (e.g., such as INR network 200), trained to produce the reconstructed data 550. We will denote this network the "synthesis network". In a hybrid-INR network 500 the latent variables 525 are trained together with the parameters $\theta$ of the neural network 540, resulting in optimal network parameters and optimal latent variables. If applicable, some parameters of at least one transformation could be trained as well. Using such an architecture helps in handling the local attributes of the input data. Indeed, a group of latent variables that correspond to a given part of the data may be uncorrelated with other groups of latent variables that correspond to other parts of the data, and, thus, groups of latent variables can be tailored to (or be characteristic of) corresponding parts of the data.

Following the training of the hybrid INR model 500 (e.g., by the encoder 320), the learned latent variables 525 and network parameters are quantized (e.g., by the quantizer 330) and coded (e.g., by the entropy-based encoder 340) into the bitstream. Thus, during inference, first the latent variable 525 and the network parameters of the trained INR network 540 are decoded (e.g., by the entropy-based decoder 420) from the bitstream and dequantized (e.g., by the dequantizer 430). Then, the decoded and dequantized latent variables are up-sampled 530. To reconstruct the data 550, the up-sampled latent variables are fed into the trained INR network 540 using the decoded and dequantized network parameters of the INR network.

A hybrid INR network, named a coordinate-based low complexity hierarchical image codec (COOL-CHIC), was proposed by Ladune et al. (see, Ladune et al., "COOL-CHIC: Coordinate-based low complexity hierarchical image codec," International Conference on Computer Vision (ICCV), 2023, hereinafter "Ladune"). In Ladune, as in many hybrid INR models, the latent variables are arranged in hierarchical layers (or channels) ranging from a low-resolution representation (that provides for compact representation of smooth image regions) to a high-resolution representation (that captures the fine details of the image).

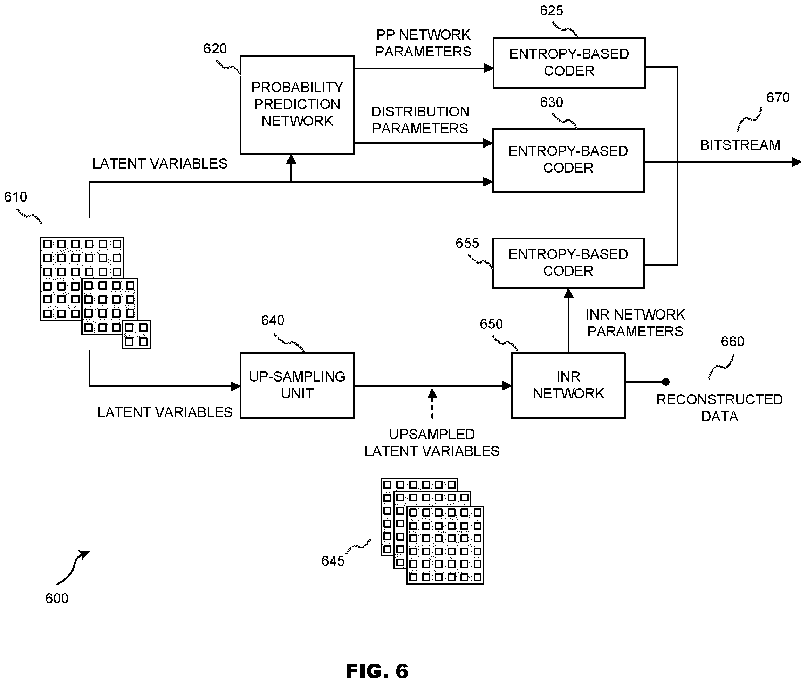

In hybrid INR networks, the latent variables, denoted by $y$, are typically the largest contributor to the bitrate (several orders of magnitude larger than that contributed by the INR network parameters). One approach to reduce the transmission cost of these latent variables is to entropy code these variables based on their learned distributions, as described in Ladune. Principles of the hybrid INR network proposed in Ladune are described below in reference to FIGs. 6-8.

FIG. 6 is a block diagram illustrating an example video encoder 600 applying a hybrid INR network. The encoder 600 includes a probability prediction (PP) network 620, an up-sampling unit 640, an INR network 650, and entropy-based coders 625, 630, 655. The encoder 600 is configured to process latent variables 610 (e.g., latent variables 525 generated by the mapping unit 520 of FIG. 5). The encoder 600 up-samples, by the up-sampling unit 640, the latent variables. The reconstructed image is obtained by using the up-sampled latent variables 645 as input of the INR network 650. Together with the up-sampled latent variables 645, the INR network 650 is trained (overfitted) to produce reconstructed data 660 (e.g., a reconstructed image of a video frame). The training results in optimal INR network parameters $\theta$ that are coded, by the entropy-based coder 655, into the bitstream 670.

In an inference mode, reconstructing the data (e.g., by a decoder 700) involves feeding the trained INR network, defined by the optimal network parameters $\theta$, with the up-sampled latent variables. Therefore, in addition to the network parameters $\theta$, the latent variables need to be coded into the bitstream 670. As further explained below, due to their large bit representation, efficient coding of the latent variables calls for the estimation of their distributions. To that end, the encoder 600 can be further configured to learn the distributions of respective latent variables using the PP network 620 - that is, a network trained to produce parameters of distributions of respective latent variables. Based on these learned distribution parameters the entropy-based coder 630 codes the latent variables into the bitstream 670. The PP network is defined by PP network parameters, denoted by $\psi$, determined during the training of the PP network 620. The entropy-based coder 625 codes these PP network parameters into the bitstream 670.

Note that in the example of FIG. 6, while the entropy-based coder 630 that codes the latent variables relies on their learned respective distributions, the other entropy-based coders 625, 655 that code the PP network parameters and the INR network parameters rely on respective non-learned distributions. In an aspect, for some of the latent variables, respective non-learned distributions can be used by the entropy-based coder 630. These non-learned distributions may be fixed distributions or may be distributions that was learned with respect to other latent variables (e.g., latent variables representing data from previous frames).

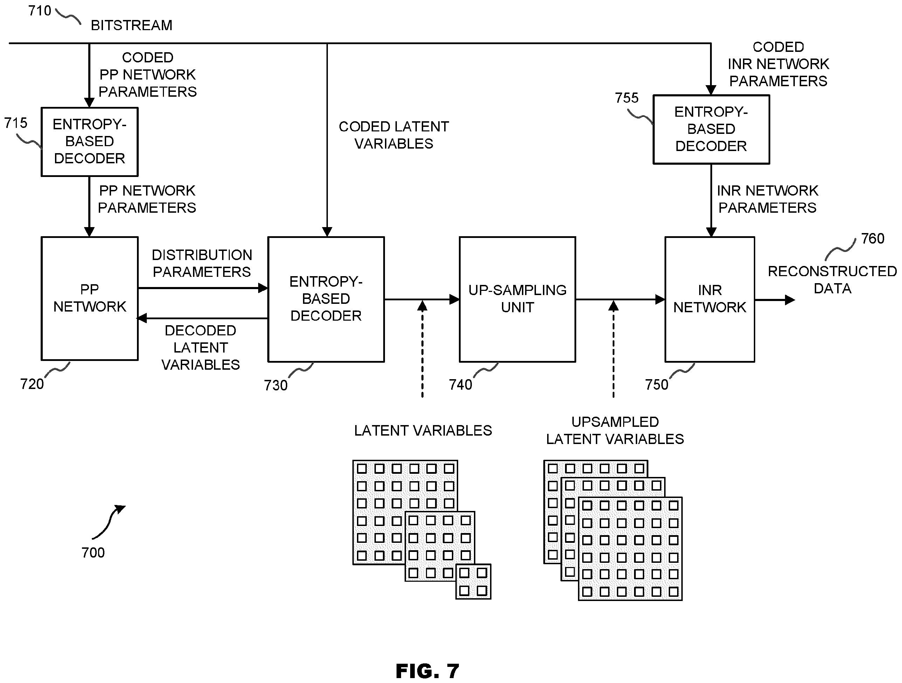

FIG. 7 is a block diagram illustrating an example video decoder applying a hybrid INR network 700. The decoder 700 includes a PP network 720, an up-sampling unit 740, an INR network 750, and entropy-based decoders 715, 730, 755. The PP network 720 produces distribution parameters of respective latent variables. The PP network 720 operates based on learned PP network parameters $\psi$, determined during the training of the PP network 620. The entropy-based decoder 715 decodes these PP network parameters from the bitstream 710. Based on the produced 720 distribution parameters, the entropy-based decoder 730 decodes the latent variables from the bitstream 710.

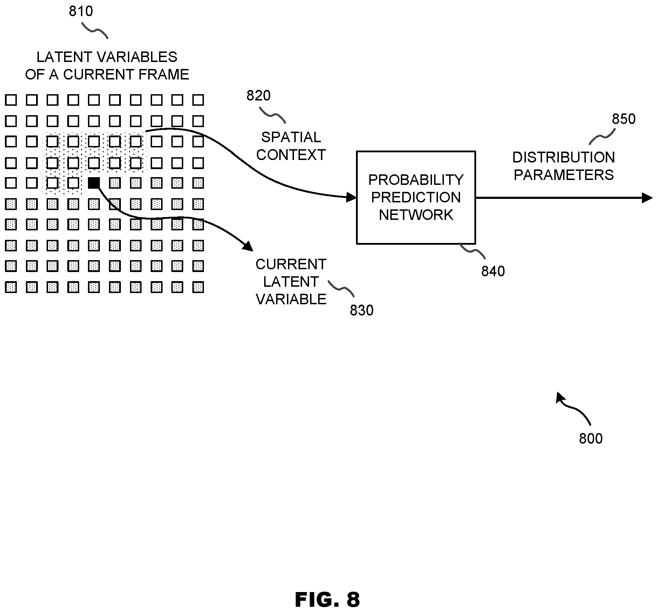

Already decoded latent variables are provided back to PP network to serve as a context in producing the distribution parameters of the currently decoded latent variable (as further described in reference to FIG. 8). The decoded latent variables are then up-sampled by the up-sampling unit 740 (as performed by the up-sampling unit 640 at the encoder 600). Fed by the up-sampled latent variables, the INR network 750 reconstructs the data 760 (e.g., a reconstructed image of a video frame), for which the INR network 750 is trained to synthesize based on the INR network parameters, decoded from the bitstream 710 by the entropy-based decoder 755.

The operation of the hybrid INR network is further explained with respect to an image $x$ of a video frame, however, $x$ may represent other types of data (such as a surface or a volume) that can be associated with a frame. Note that latent variables representative of data regions (e.g., pixels) from a data frame (e.g., a video frame) referred to herein also as corresponding to that data frame.

As illustrated, the INR network 650, 750 utilizes a hierarchical representation that includes multiple layers of different spatial resolutions 610. Each layer represents an image $x$ with a width $W$ and a height $H$ with a corresponding level of detail. Formally, the discrete latent variables, denoted by $\hat{y}$, can include $K$ layers of latent variables: $\hat{y} = \{\hat{y}_k, k = 0: (K-1)\}$. Each layer $\hat{y}_k$ is of width $W/2^k$ and of height $H/2^k$. During the up-sampling 640, each layer $\hat{y}_k$ may be up-sampled by a factor of $2^k$ (using any interpolation method) to obtain the up-sampled layer version, denoted by $\hat{z}_k$. Together, the up-sampled layers, $\hat{z} = \{\hat{z}_k, k = 0: (K-1)\}$, result in a dense 3D representation 645 of dimension $W$ by $H$ by $K$. Thus, the INR network 650 can be trained based on $W$ by $H$ inputs of $\hat{z}(i, j)$, where each input can include up to $K$ latent variables, that is, $\hat{z}(i, j) = \{\hat{z}(i, j, k), k = 0: (K-1))\}$. For example, the trained INR network 750 can be used to predict a reconstructed pixel $\hat{x}(i, j)$, of the original pixel $x(i, j)$, by $\hat{x}(i, j) = f_\theta(\hat{z}(i, j))$. In an aspect, depending on the desired bitrate, not all the layers of the latent variables may be used to represent (code) an image $x$.

When compressing an image $x$, the goal is to do so while minimizing a cost function, as discussed with respect to equation (2). In the case of a hybrid INR network, the cost of coding an image can be expressed as:

$$Cost = D(x, f_\theta(\hat{z})) + \lambda R(\hat{y}, \theta, \psi), \qquad (4)$$

where $x$ denotes an image to be coded with height $H$, width $W$, and $F$ color channels; where $\hat{y}$ denotes the quantized latent variables and $\hat{z}$ denotes their up-sampled version; where $f_\theta$ denotes the INR network 650, 750 and $\theta$ denotes the INR network parameters; where $f_\psi$ denotes the PP network 620, 720 and $\psi$ denotes the PP network parameters; where $D$ denotes a distortion metric measuring the distance between the image $x$ and its reconstructed version $\hat{x}$, as produced by the INR network $f_\theta$ from the up-sampled latent variables $\hat{z}$, that is, $\hat{x} = f_\theta(\hat{z})$; and where $R$ denotes the rate (in bits per pixel) measuring the number of bits that are required to represent a pixel in a bitstream, that is, the number of bits that are required to represent $\hat{y}, \theta$, and $\psi$. The distortion $D$ and the rate $R$ are balanced by a scalar value denoted by $\lambda$. In a case where the up-sampling unit 640 is implemented by a neural network, the parameters of that network are also learned and coded into the bitstream 670 to be used by the up-sampling unit 740 when used in an inference mode.

The objective, thus, is to find the latent variables $\hat{y}$, the INR network parameters $\theta$, and the PP network parameters $\psi$ that minimize the coding cost, as follows:

$$\min_{\hat{y}, \theta, \psi} Cost = \min_{\hat{y}, \theta, \psi} \left( D(x, f_\theta(\hat{z})) + \lambda R(\hat{y}, \theta, \psi) \right). \qquad (5)$$

Since the contribution of the INR network parameters $\theta$ and the PP network parameters $\psi$ to the rate $R$ is not as significant as that of the latent variables $\hat{y}$, only the latter can be considered when minimizing the coding cost, that is, $R(\hat{y}, \theta, \psi) \approx R(\hat{y})$. Furthermore, $R(\hat{y})$ can be replaced by the cross entropy. Thus, equation (5) can be replaced by:

$$\min_{\hat{y},\theta,\psi} Cost = \min_{\hat{y},\theta,\psi} (D\left(x, f_{\boldsymbol{\theta}}(\hat{z})\right) - \lambda \log_2 P_{\psi}(\hat{y})), \qquad (6)$$

where $P_{\psi}(\hat{y})$ is the joint distribution of the latent variables $\hat{y}$. According to Equation (6), minimizing the cost involves minimizing the rate associated with the latent variables. This can be achieved by reducing the amount of information contained in the latent variables, at the price of a less accurate reconstruction, as less information in $\hat{y}$ is likely to increase the distortion $D$. Alternatively, minimizing the cost can be achieved by obtaining estimates of the distributions of the respective latent variables, as described herein.

Due to the high dimensionality of the latent variables, modeling of the joint distribution of $\hat{y}$, $P_{\psi}(\hat{y})$, is not tractable. Instead, $P_{\psi}(\hat{y})$ can be factorized as follows:

$$P_{\psi}(\hat{y}) = \prod_{i,j,k} p_{\psi}\left(\hat{y}_{ijk} \big| c_{ijk}^{s}\right), \qquad (7)$$

where $p_{\psi}\left(\hat{y}_{ijk}\big|c_{ijk}^{s}\right)$ denotes a discrete conditional probability of a latent variable at position (i, j, k) conditioned on a corresponding spatial context $c_{ijk}^{s}$, and where (i, j) represents the spatial coordinate of a latent variable in a layer $k$. The spatial context $c_{ijk}^{s}$ may be provided by spatially neighboring latent variables that have already been decoded, and preferably selected in a way that enables parallel decoding of the different layers of the latent variables (e.g., in a wavefront-like approach).

In practice, the discrete distribution $p_{\psi}\left(\hat{y}_{ijk}\big|c_{ijk}^{s}\right)$ can be modeled by integrating the continuous distribution of the non-quantized latent variable, denoted by $g(y)$ and modeled as a Laplacian distribution, for example. Thus, the PP network 620 learns the expectation parameter, $\mu_{ijk}$, and the scale parameter, $\sigma_{ijk}$, based on the context $c_{ijk}^{s}$. Accordingly, the probability of a latent variable $\hat{y}_{ijk}$ can be expressed as:

$$p_{\psi}\left(\hat{y}_{ijk}\big|c_{ijk}\right) = \int_{\hat{y}_{ijk}-0.5}^{\hat{y}_{ijk}+0.5} g(y)dy, \qquad (8)$$

where $g \cong \mathcal{L}(\mu_{ijk}, \sigma_{ijk})$ denotes a Laplacian distribution. Thus, in the case of a Laplacian distribution, for example, given a context $c_{ijk}$, the PP network 620 can be trained to produce the corresponding distribution parameters, that is, $\{\mu_{ijk}, \sigma_{ijk}\} = f_{\psi}(c_{ijk})$, as described next with respect to FIG. 8.

FIG. 8 is a diagram illustrating prediction of a latent variable distribution, using a spatial context 800. For simplicity of the presentation, only one layer of the latent variables 810 is illustrated, however, processes applied to this layer can be similarly applied to the other layers. The example of FIG. 8 illustrates the process of predicting a distribution of a current latent variable (830) to be coded (e.g., by encoder 600 or 900) or to be decoded (e.g., by decoder 700 or 1000). However, when coding the latent variable, typically, neighboring latent variables from the current frame are available. When decoding the latent variable, typically, some of the neighboring latent variables from the current frame are not yet available (decoded). This is indicated by the white squares (available latent variables) and the patterned squares (not yet available latent variables).

As illustrated, a spatial context 820 can be constructed based on the latent variables in the spatial neighborhood of the current latent variable 830 - that is, for a current latent variable at position (i, j, k), latent variables can be selected within a neighborhood located relative to position (i, j, k) (e.g., 820 in FIG. 8) to form the spatial context $c_{ijk}^{s}$. The obtained spatial context, $c_{ijk}^{s}$, can then be used by the PP network 840 to predict the distribution of the current latent variable. The distribution of the current latent variable is predicted by estimating the parameters of that distribution (e.g., $\{\mu_{ijk}, \sigma_{ijk}\}$). To that end, in the encoder, the PP network 840 is trained to produce, for each latent variable, the distribution parameters 850 based on the respective spatial context. This training can be done by minimizing the coding cost expressed in equation (6). The training of the PP network 840 results in the PP network parameters $\psi$. In the decoder, the trained PP network 840 is operated in an inference mode to produce, for each latent variable, the distribution parameters 850 from the respective spatial context. The trained PP network 840 operates based on the PP network parameters $\psi$ determined by the encoder during training and provided to the decoder in the bitstream.

In the case of a video stream, for example, a hybrid INR network can be used to represent each image of a video frame by a set of latent variables, $\hat{y}$, that (together with the PP network parameters $\psi$ and the INR network parameters $\theta$) can be coded into a bitstream. To decrease the bitrate of the compressed video, the set of latent variables can be trained to represent a group of video frames (see, e.g., Hyunjik et al., "C3: High-Performance and Low-Complexity Neural Compression from a Single Image or Video," Proceedings of the IEEE/CVF Conference on Computer Vision and Pattern Recognition (CVPR), 2024, pp. 9347-9358). However, such an approach makes it difficult to randomly access individual frames at the decoder end. In addressing this shortcoming, Leguay et al. propose a predictive hybrid INR network applicable to individual frames (see, Leguay et al., Cool-chic video: Learned video coding with 800 parameters, Data Compression Conference (DCC) 2024, IEEE, pp 23-32, 2024, hereinafter "Leguay").

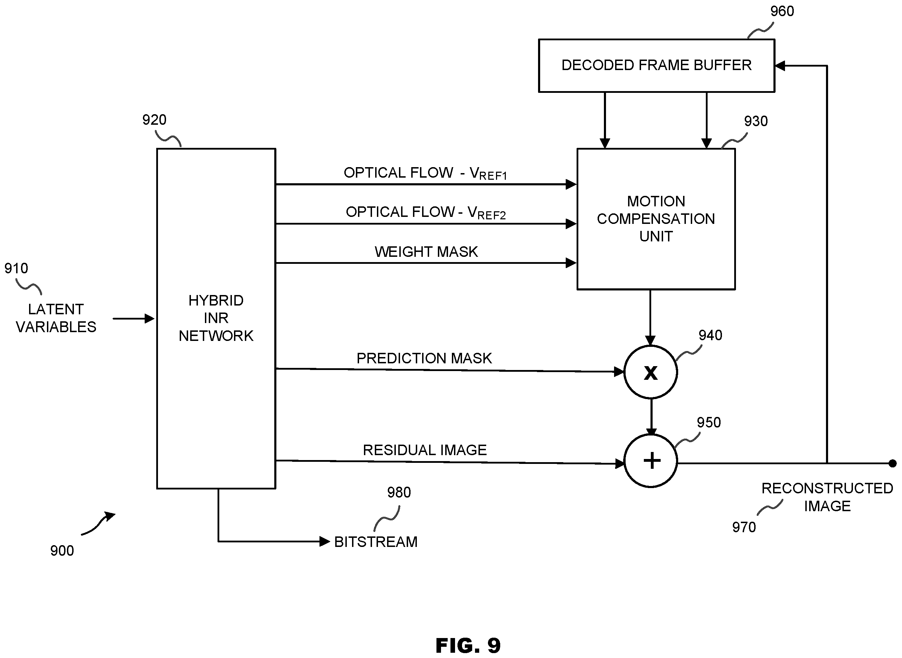

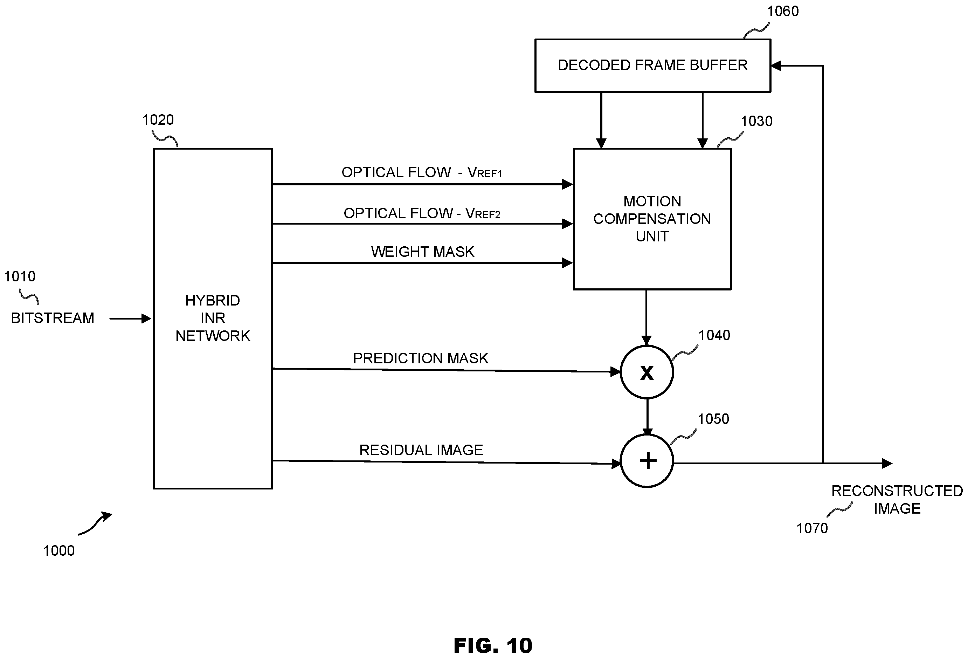

Principles of the predictive hybrid INR network proposed in Leguay are described next in reference to FIGS. 9 and 10. The operation of the predictive hybrid INR network is explained herein with respect to an image $x$ of a video frame, however, $x$ may represent other types of data (such as a surface or a volume) that can be associated with a frame. Note that latent variables representative of data regions (e.g., pixels) from a data frame (e.g., a video frame) referred to herein also as corresponding to that data frame.

FIG. 9 is a block diagram illustrating an example video encoder 900 applying a predictive hybrid INR network. The encoder 900 receives, as an input, latent variables 910 and outputs a bitstream 980. The encoder 900 includes a hybrid INR network 920, a motion compensation unit 930, a multiplier 940, an adder 950, and a decoded frame buffer 960. The hybrid INR network 920 generally operates (in a training mode) as the hybrid INR network described in reference to FIG. 6. However, in this case the hybrid INR network is trained to produce two optical flows, $v_{ref1}$ and $v_{ref2}$, a weight mask $\beta$, a prediction mask $\propto$, and a residual image $r$. The optical flows represent the pixel-wise motion between respective reference frames (already reconstructed images 970, stored in the decoded frame buffer 960) and the current frame. Moreover, the motion compensation unit 930 can use these optical flows to generate a prediction, denoted by $\tilde{x}$, of the currently coded image x, as follows:

$$\tilde{x} = \beta \cdot warp(\hat{x}_{ref1}, v_{ref1}) + (1 - \beta) \cdot warp(\hat{x}_{ref2}, v_{ref2}), \qquad (9)$$

where *warp* is an operator that warps (i.e., spatially maps) an image into another image based on motion vectors given by an optical flow. Specifically, a first reference image, $\hat{x}_{ref1}$, is warped into a first prediction, $\tilde{x}_1 = warp(\hat{x}_{ref1}, v_{ref1})$ and a second reference image, $\hat{x}_{ref2}$ is warped into a second prediction, $\tilde{x}_2 = warp(\hat{x}_{ref2}, v_{ref2})$. Using elementwise multiplication, denoted by "·". the two predictions are then blended by the mask $\beta$, yielding the prediction image $\tilde{x}$. As illustrated in FIG. 9, the prediction image $\tilde{x}$ (output of the motion compensation unit 930) is then corrected by the residual image r, as follows:

$$\hat{x} = r + \propto \cdot \tilde{x}, \qquad (10)$$

where, the prediction mask $\propto$ is a binary mask that can be used to mask out 940 a prediction pixel if it does not reliably predict the corresponding pixel in $x$. Adding 950 the masked prediction image, $\propto \cdot \tilde{x}$, to the residual image $r$ produces the reconstructed image 970, $\hat{x}$.

Hence, the two optical flows, $v_{ref1}$ and $v_{ref2}$, the weight mask $\beta$, the prediction mask $\propto$, and the residual image $r$ can be learned by minimizing the coding cost expressed in equation (4), where $f_\theta(\hat{z}) = \hat{x} = r + \propto \cdot \tilde{x}$. Note that the predictive hybrid INR network, illustrated in FIG. 9, can be applied using only one reference image or any number of reference images available in the decoded frame buffer 960. In such a case equation (9) can be expressed as:

$$\tilde{x} = \sum_{q=1}^{Q} \beta_q \cdot warp(\hat{x}_{refq}, v_{refq}), \qquad (11)$$

where $Q$ is the number of reference images used, $\beta_q$ is a weighting factor applied to the $q^{th}$ prediction from the $q^{th}$ reference image and $\sum_{q=1}^{Q} \beta_q$ is equal to an all-ones matrix, and $v_{refq}$ is the optical flow with respect to $\hat{x}_{refq}$, that is, the $q^{th}$ reference image. In a variant, the weight mask $\beta$, the prediction mask $\propto$, or both can be removed from the predictive hybrid INR network.

FIG. 10 is a block diagram illustrating an example video decoder 1000 applying a predictive hybrid INR network. The decoder 1000 receives, as an input, a bitstream 1010 and outputs reconstructed images 1070. The decoder 1000 includes a hybrid INR network 1020, a motion compensation unit 1030, a multiplier 1040, an adder 1050, and a decoded frame buffer 1060. The hybrid INR network 1020 generally operates (in an inference mode) as the hybrid INR network described in reference to FIG. 7. However, in this case the hybrid INR network produces two optical flows, $v_{ref1}$ and $v_{ref2}$, a weight mask $\beta$, a prediction mask $\propto$, and a residual image $r$. The optical flows represent the pixel-wise motion between respective reference frames (already reconstructed images 1070, stored in the decoded frame buffer 1060) and the current frame. Moreover, the motion compensation unit 1030 can use these optical flows to generate a prediction, denoted by $\tilde{x}$, of the currently decoded image $x$, as expressed by equation (9). As illustrated in FIG. 10, the prediction image $\tilde{x}$ (output of the motion compensation unit 1030) is then corrected by the residual image $r$, as shown by equation (10). Adding 1050 the masked prediction image, $\propto\cdot\tilde{x}$, to the residual image $r$ produces the reconstructed image 1070, $\hat{x}$.

In a commonly owned EP Patent Application No. 23305282.8 (our docket number 2023PF0084), we described how non-hybrid INR models could be used to encode a signal by partitioning a signal and using a different model for each coding unit. We also described several mechanisms to reuse some layers from a previous coding unit in a new one.

Today, hybrid INR approaches use the same synthesis network parameters for the whole signal, thus requiring large networks to encode all possible transforms (all parameters contributing to the whole signal). This makes training difficult and may lead to a large network to encode all possible transforms and thus to both higher bitrate and decoding computational cost. The problem is similar for up-sampling networks when they are present.

In this document, we propose solutions to better handle local contents in a signal compressed by a hybrid INR. We propose to partition the input domain into coding units (CU) (e.g., a coding tree unit (CTU)) and to learn a set of different parameters for the up-sampling and synthesis network of the hybrid INR model for each coding unit. We also propose different ways to generate a bitstream for the signal encoding including the coding tree units, the association between coding units and networks and the parameters of the different up-sampling or synthesis networks.

In the following, we describe an encoding and a corresponding decoding procedure for hybrid-INR in general. We also describe an embodiment with the COOL-CHIC algorithm.

In one embodiment, we propose in this document to learn at least two up-sampling and at least two synthesis networks that are associated to different local parts of the signal for hybrid INR methods. These different up-sampling (or synthesis) models may have different architectures and/or model parameters from each other. To ensure efficient transmission of the partitioning information, it is possible to rely on existing schemes such as a division using coding units. Without loss of generality, we will describe how it applies when the signal is a 2D image. In one embodiment, we propose to partition the signal and, for each coding unit, to specify the up-sampling and synthesis network used. Therefore, more specialized and smaller networks may be used, which may reduce the size of the networks and save computation.

Associating a network or a function to a part of the signal means that any parts associated to the same network or function will be processed by the same network or function. However, this network or function may not be known yet when the association is created. For example, similar parts of the signal could be associated to the same neural network or functions before defining this function. In one example, we specify that the $i^{th}$ network/function will be used for a part even though the $i^{th}$ network/function needs to be trained or defined later. In this case, we may consider that the signal is classified or categorized into multiple groups, and each group will be assigned (associated) with a corresponding function. In another example, the neural network or function could be modified later to better reconstruct all the parts associated to this network or function, for example, using a machine learning algorithm or a genetic algorithm.

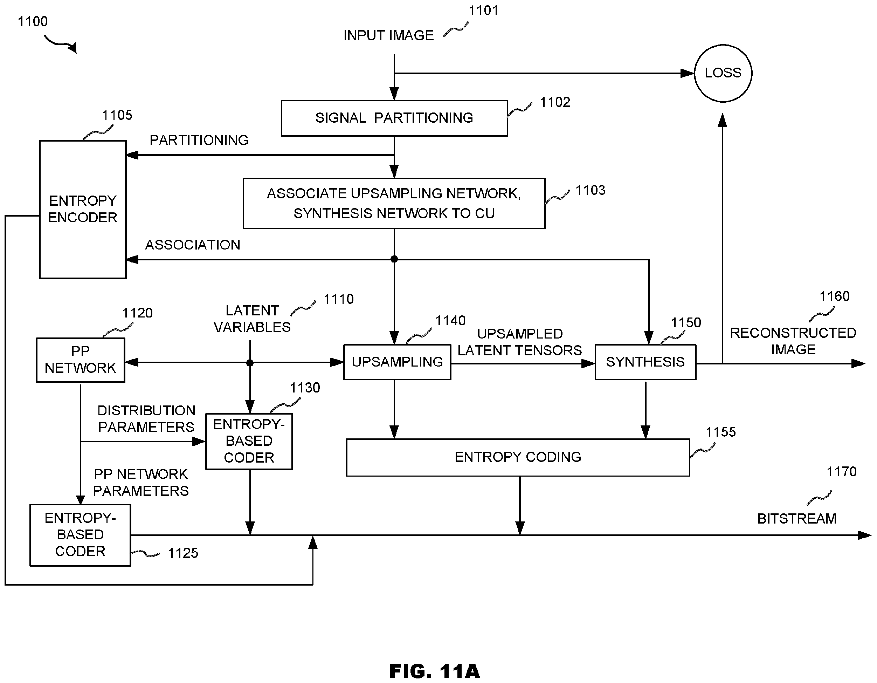

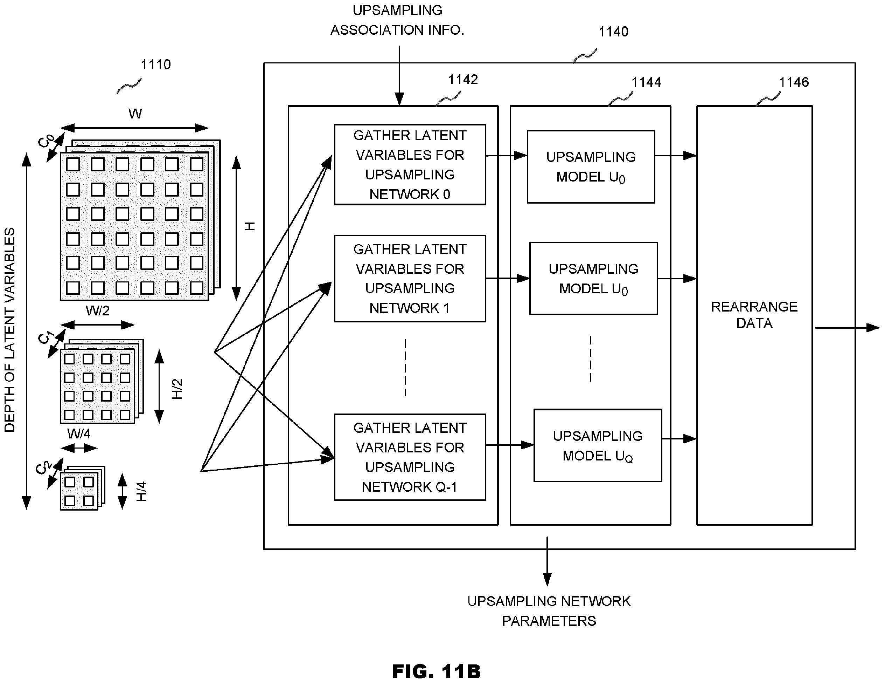

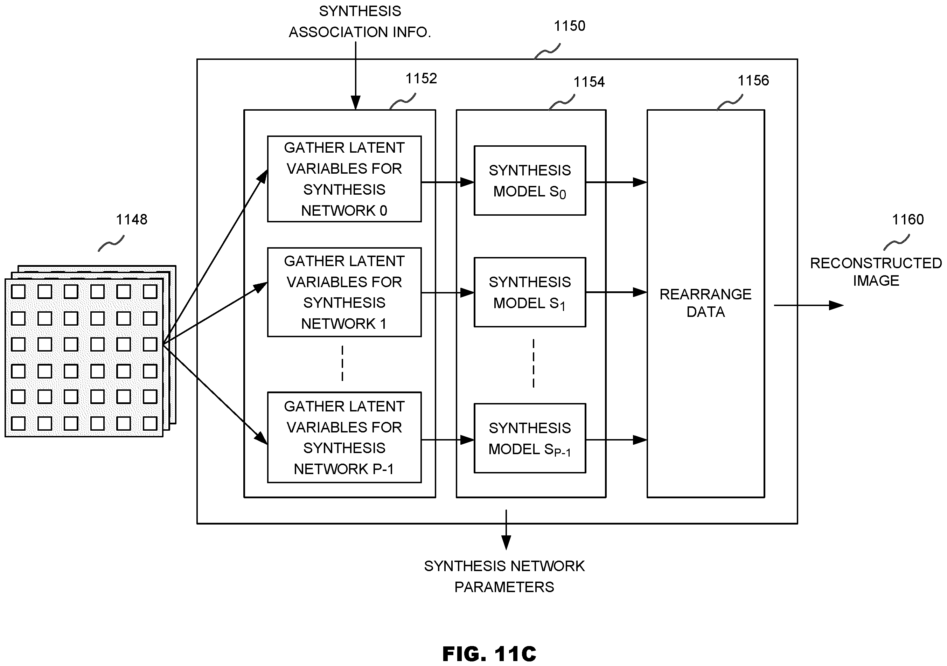

The concept is illustrated in FIGs. 11A, 11B and 11C, according to an embodiment. The encoder includes a probability prediction (PP) network 1120, Q up-sampling models 1144, P synthesis models 1154, and entropy-based coders 1105, 1125, 1130, 1155. The signal (1101, e.g., an image) is first partitioned into coding units (1102). To each coding unit is associated (1103) one out of $Q$ up-sampling networks and one out of $P$ synthesis network. The partitioning information and the associations are included in the bitstream, which may involve entropy coding (1105).

The encoder 1100 is configured to process latent variables 1110 (e.g., latent variables 525 generated by the mapping unit 520 of FIG. 5). Then, the latent variables are up-sampled by an up-sampling unit (1140), as illustrated in FIG. 11B. The up-sampling unit (1140) gathers (1142) the latent variables that are to be up-sampled and that are associated (1103) to the same up-sampling network. Each group of latent variables is up-sampled by the corresponding up-sampling model 1144. The up-sampled latent variables are then rearranged (1146) to reconstruct the up-sampled latent tensors (1148), i.e., the output is associated to the proper position in the upsampled latent tensor. The encoder then reconstructs the encoded signal from the upsampled latent variables using a synthesis unit 1150, as illustrated in FIG. 11C. It first gathers (1152) the latent variables that are associated (1103) to the same synthesis network. Then, each group of up-sampled latent variables is processed by the corresponding synthesis network 1154. Finally, the reconstructed data 1160 (e.g., a reconstructed image of a video frame) is obtained by rearranging (1156) the output of the synthesis networks, i.e., the output is associated to the proper position in the reconstructed image.

Together with the latent variables 1110, the up-sampling networks 1144 and the synthesis networks 1154 are trained (overfitted) to produce this reconstructed data 1160 (e.g., a reconstructed image of a video frame). The training results in optimal neural network parameters $\theta$ that are coded, by the entropy-based coder 1155, into the bitstream 1170. In an inference mode, reconstructing the data (e.g., by a decoder 700) involves feeding the trained synthesis networks, defined by the optimal network parameters $\theta$, with the associated (1103) up-sampled latent variable. Consequently, in addition to the network parameters $\theta$, the latent variables need to be coded into the bitstream 1170. To that end, the encoder 1100 can be further configured to learn the distributions of respective latent variables using the PP network 1120 - that is, a network trained to produce parameters of distributions of respective latent variables. Based on these learned distribution parameters the entropy-based coder 1130 codes the latent variables into the bitstream 1170. The PP network is defined by PP network parameters, denoted by $\psi$, determined during the training of the PP network 1120. The entropy-based coder 1125 codes these PP network parameters into the bitstream 1170.

Note that in the example of FIG. 11, while the entropy-based coder 1130 that codes the latent variables relies on their learned respective distributions, the other entropy-based coders 1105, 1125, 1155 that code the PP network parameters and the up-sampling and synthesis network parameters rely on respective non-learned distributions. In an aspect, for some of the latent variables, respective non-learned distributions can be used by the entropy-based coder 1130. These non-learned distributions may be fixed distributions or may be distributions that was learned with respect to other latent variables (e.g., latent variables representing data from previous frames).

In the above, we describe that multiple synthesis models and multiple upsampling models can be used for each part of the signal. Note that we can also have multiple upsampling models with one single synthesis network, or one single upsampling network with multiple synthesis networks. In that case, a single synthesis network and up-sampling network is associated to the signal and is used for all coding units. The corresponding association information does not need to be transmitted.

In some embodiments, a different partitioning may be used for the association of the up-sampling and for the association of the synthesis networks.

In some embodiments, gathering the latent variables that are to be processed by an up-sampling network and synthesis network may be done differently. For example, each coding unit may be processed one by one sequentially. As another example, gathering could be done only for a subset of the coding units at a time.

We will now describe an encoding procedure, and later detail the decoding process from the bitstream according to changes applied during encoding.

**Encoding**

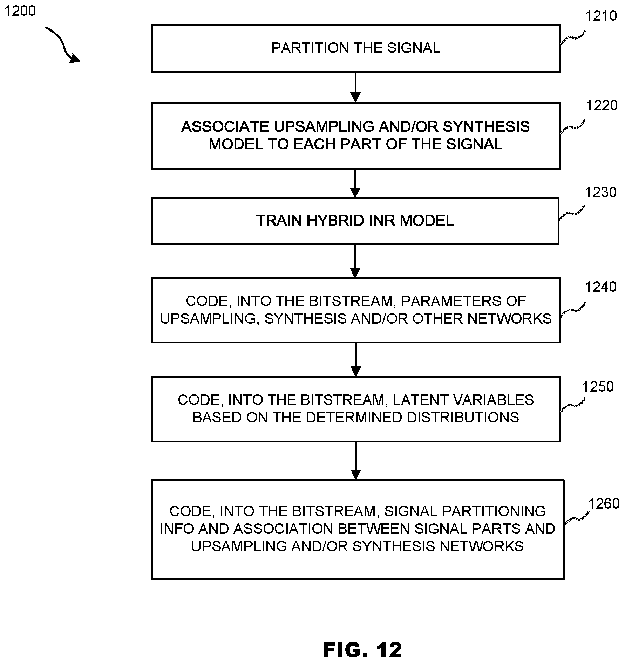

FIG. 12 illustrates an encoding algorithm that can be used to encode a signal (or a segment of a signal), according to an embodiment.

1. **The signal (e.g., a frame) is divided into parts** (1210): the signal is partitioned into parts or coding units (CU). Examples of possible choices include fixed-size window, quadtree, superpixels, binary-tree, ternary-tree partitioning or Multi-Type Tree. Many approaches are possible to partition the signal into coding tree units. A brute force approach is possible, where all possible partitions are considered. Another possible approach is a greedy search where an initial CU covering the whole signal is incrementally divided by evaluating the impact of a CU split and splitting is done if the impact in terms of rate/distortion is positive. In other words, a CU is split further if its encoding (together with its associated latent grids) is less advantageous in terms of rate distortion than encoding its children. It is also possible to build the CU partition without using or learning hybrid INR networks. As an example, both a brute force or a greedy search approach could optimize other characteristics of the CUs, such as pixel mean, variance, texture and/or any other statistics of the signal within the considered CUs. Another possible approach is to use a segmentation algorithm that uses the characteristics of the image to choose a good partitioning, including segmentation algorithm based on machine learning.

2. **Associate up-sampling and synthesis model to each part of the signal (1220).** This step associates one up-sampling and synthesis model to each part of the signal. It may involve evaluating the performance of different up-sampling and synthesis model on this part of the signal, comparing these performances to different up-sampling and synthesis models on this and on other parts of the signal, choosing one up-sampling and synthesis models directly based on the characteristics of this part of the signal, for example through an algorithm or a machine learning model. As an example, a brute force approach may define a set of Q up-sampling networks and a set of P synthesis networks, and would evaluate all possible associations between the coding units and the up-sampling and synthesis networks in terms of bitrate and distortion and select the particular association that minimizes the cost associated to the encoding and reconstruction of that part of the signal as a function of the association between the coding units and the Q up-sampling networks and a the P synthesis networks. In another embodiment, a coding unit may be associated to one up-sampling network and one synthesis network based on its size.

3. **Train Hybrid INR model** (1230) The Hybrid INR model is trained, using the association between signal parts and up-sampling and synthesis network. This is the same procedure as training a hybrid INR model. Typically, the full INR model is trained together, including the up-sampling networks, the synthesis networks, the latent values and the autoregressive model (or other PP model) yielding a probability distribution over the latent values. In another variant, the model may be trained in multiple steps, by first training a single up-sampling and synthesis network and iteratively dividing the coding units into sets and associating a different up-sampling and synthesis network to each set, for example by clustering the coding units based on the performance of the networks trained in the previous step and/or on intermediate features of these networks, and then retraining the networks. In some variants, training may involve quantization aware training. The training procedure may also involve steps to account for the coding of the probability model, such as quantization, pruning etc., for example by applying these steps, using additional noise and/or adding specific terms to the loss function such as the rate of the network parameters.

### 4. Encode Hybrid INR parameters.

a. The neural networks (probability model, P synthesis models and Q up-sampling models) are encoded in a bitstream (1240). If the model involves a neural network, this is typically done by a neural compression codec such as Neural Network Coding (NNC)/ ISO/IEC 15938-17 or MPEG-7 part 17 or simply by quantizing the weights and/or pruning some neurons from the network(s).

b. The latent values are coded by an entropy coder (1250), based on the discrete probability distribution over the quantized latent features given by the autoregressive model (or other models). This may involve quantization of the latent features if this was not done before.

c. The partitioning information and the association between signal parts and up-sampling and synthesis networks are encoded into the bitstream (1260). This may involve the use of entropy coders. We can also use the method used in the video coding standard, for example, in HEVC or VVC, to encode the partitioning.

The procedure above describes a sequential approach to solve the aforementioned optimization problem. There are many possible variants of this procedure in addition to those described above. For example, several elements could be optimized at the same time. The partitioning, the association between coding units and up-sampling and synthesis networks, the parameters could be optimized together using any optimization algorithm such as greedy search, gradient descent of a specific loss, genetic algorithms, the use of machine learning algorithms etc. As another example, associating an up-sampling and synthesis network to a coding unit could be based at least partially on the result of the encoding of a previous coding unit with the same or different up-sampling and synthesis network, for example using a reinforcement learning or an active learning algorithm. In yet another example, one or multiple steps may also involve some computation that can be beneficial or reused for another step. Some approaches for partitioning the signal or choosing the up-sampling and synthesis network associated to a coding unit may require the computation and the evaluation of hybrid INR models, to evaluate the quality of such a partitioning and up-sampling and synthesis network. In that case, these computations may be reused in other steps or the results of these other steps may be directly obtained from said computation or the two steps merged.

In some variants, a default up-sampling and synthesis network may be included in the bitstream.

### Decoding

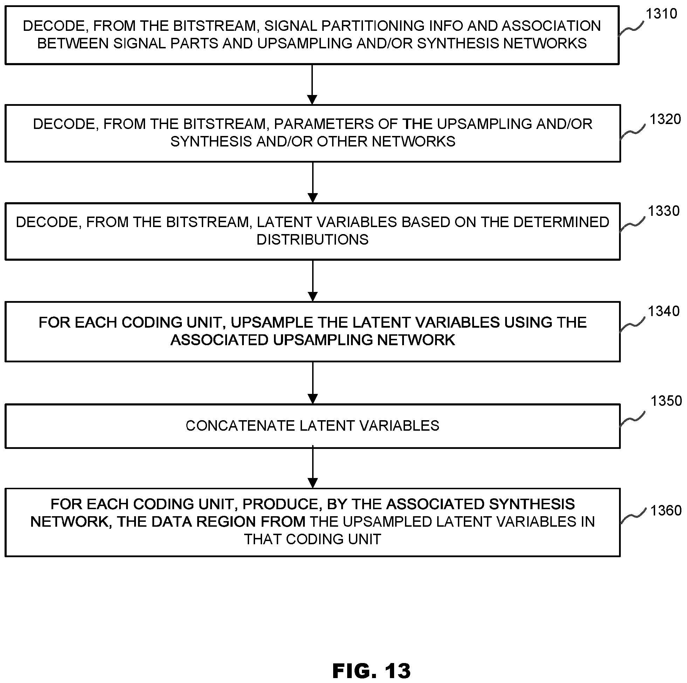

FIG. 13 illustrates a method of decoding the resulting bitstream by the following procedure to first decode the latent features, according to an embodiment. This procedure is illustrated in FIG. 13.

In the first step (1310), the partitioning information and the association between signal parts and up-sampling and synthesis networks of the image are decoded.

Then, the neural networks (e.g. probability model such as an auto-regressive model, P synthesis models and Q up-sampling models) are obtained (1320). This is typically done by decoding these models from the bitstream, but some or all models may already be available to the decoder, for example because some or all models have been used for another part of the signal or are transmitted separately.

Latent variables are decoded (1330) from the bitstream, for example, using the auto-regressive or other probability model and an entropy decoder as in any hybrid INR method and described above.

For each coding unit, the decoded features may be up-sampled (1340). The up-sampling network is selected based on the association information decoded in step (1310). In some variants, all coding units using the same up-sampling networks may be processed at the same time. The up-sampled values may then be rearranged to obtain the latent grid for the whole signal (e.g., frame).

Then all latent grids are concatenated (1350) as in typical hybrid INR, i.e., by creating a larger tensor with 3 dimensions, the first two dimensions being equal to the first 2 dimensions of the tensors being concatenated and the third dimension being equal to the sum of the sizes of the third dimensions of the tensor being concatenated.

For each coding unit, the up-sampled and concatenated latent features are used by the associated synthesis network to decode the signal (1360). The associated synthesis network used is identified by the association information decoded in step (1310). In some variants, all coding units using the same synthesis networks may be processed at the same time. The decoded values may then be rearranged to obtain the decoded signal (e.g., frame). For 2D images or video, the output of the synthesis networks would typically be pixel colors. For 3D scene, the output would typically be color and density of a voxel. For a 3D surface (e.g. hologram), it may be a signed or unsigned distance to the surface.

In some variants, the concatenation step may be omitted, for example when up-sampled decoded features of all levels are directly stored in a single tensor.

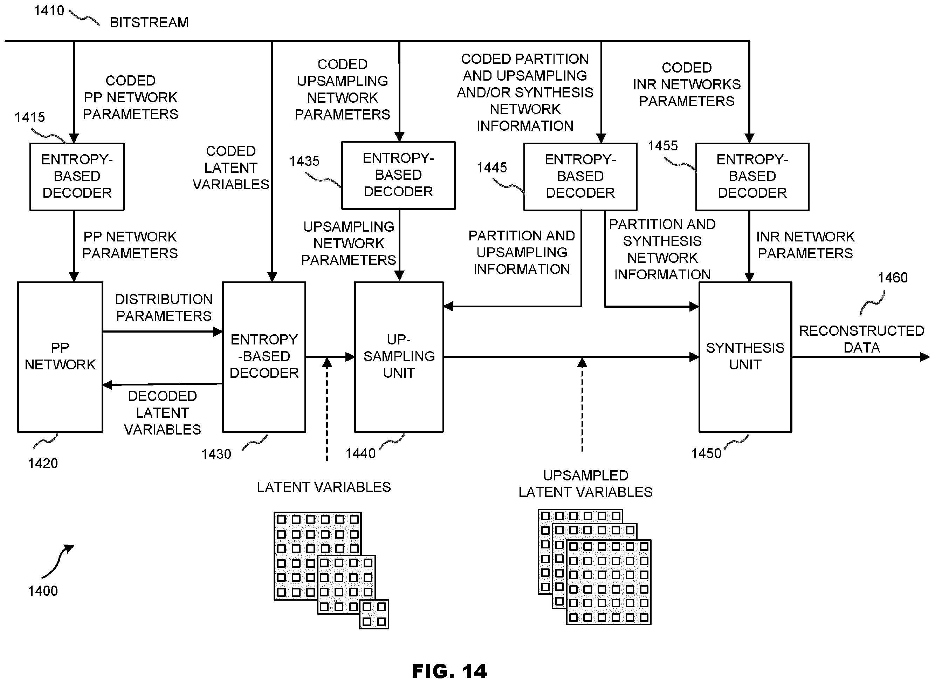

In a particular variant, the decoded latent features can be used to decode the signal as in the COOL-CHIC algorithm. We illustrate the procedure in FIG. 14, according to an embodiment.

The decoder 1400 includes a PP network 1420, an up-sampling unit 1440, a synthesis unit 1450, and entropy-based decoders 1415, 1430, 1435, 1445, 1455. The PP network 1420 produces distribution parameters of respective latent variables. The PP network 1420 operates based on learned PP network parameters $\psi$, determined during the training of the PP network (620 or 1120). The entropy-based decoder 1415 decodes these PP network parameters from the bitstream 1410. Based on the produced 1420 distribution parameters, the entropy-based decoder 1430 decodes the identified latent variables from the bitstream 1410. Already decoded latent variables are provided back to PP network to serve as a context in producing the distribution parameters of the currently decoded latent variable (as further described in reference to FIG. 8).

The entropy-based decoder 1445 decodes the signal partitioning information and the up-sampling and synthesis network associated to each part of the signal from the bitstream 1410. The partition and up-sampling network associated to each part of the signal are used by the up-sampling unit 1140. This up-sampling unit 1440 up-samples the decoded latent variables. As performed by the up-sampling unit 1140 at the encoder 1100, for each coding unit, the up-sampling network associated to this coding unit is used to obtain the up-sampled latent variable for this coding unit.

Fed by the up-sampled latent variables, the synthesis unit 1450 reconstructs the data 1460 (e.g., a reconstructed image of a video frame) for which the synthesis unit 1450 is trained to synthesize based on the synthesis network parameters, decoded from the bitstream 1410 by the entropy-based decoder 1455, and based on the partitioning information and synthesis network associated to each part of the signal. As performed by the synthesis unit 1150 at the encoder 1100, for each coding unit, the synthesis network associated to this coding unit is used to obtain the decoded signal values for this coding unit.

In the above, we describe that at least one of the upsampling model and the synthesis model in a hybrid INR model can be associated with a partition of the signal. More generally, an individual processing model can be associated with a partition of the signal, and any partitions associated with the same processing model would be processed by the same processing model. For example, the processing model can include one or both of the upsampling model and the synthesis model, and the processing model can also be used for other functionalities.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A method of decoding a signal, comprising:

   decoding information indicating partitioning of the signal into a plurality of partitions;
   for each partition of the plurality of partitions:
   decoding information indicating association of the partition to a respective processing model of a plurality of processing models;
   decoding latent variables;
   processing the latent variables based on the respective processing models to form processed latent variables; and
   reconstructing the signal from the processed latent variables.

2. An apparatus for decoding a signal, comprising one or more processors and at least one memory coupled to the one or more processors, wherein the one or more processors are configured to:

   decode information indicating partitioning of the signal into a plurality of partitions;
   for each partition of the plurality of partitions:
   decode information indicating association of the partition to a respective processing model of a plurality of processing models;
   decode latent variables;
   process the latent variables based on the respective processing models to form processed latent variables; and
   reconstruct the signal from the processed latent variables.

3. The method of claim 1, wherein a processing model corresponds to a synthesis model, further comprising, or the apparatus of claim 2, wherein the one or more processors are further configured to perform:

   for each partition of the plurality of partitions:
   decoding information indicating association of the partition to a respective upsampling model of a plurality of upsampling models,
   wherein the latent variables are upsampled based on the respective upsampling models to form upsampled latent variables,
   wherein the signal is reconstructed from the upsampled latent variables based on the respective synthesis models.

4. A method of encoding a signal, comprising:

   encoding information indicating partitioning of the signal into a plurality of partitions;
   for each partition of the plurality of partitions:
   encoding information indicating association of the partition to a respective processing model of a plurality of processing models;
   obtaining latent variables associated with coordinates of samples of the signal;
   encoding the latent variables; and
   encoding model parameters for the plurality of processing models.

5. An apparatus for encoding a signal, comprising one or more processors and at least one memory coupled to the one or more processors, wherein the one or more processors are configured to:

   encode information indicating partitioning of the signal into a plurality of partitions;
   for each partition of the plurality of partitions:

encode information indicating association of the partition to a respective processing model of a plurality of processing models;
obtain latent variables associated with coordinates of samples of the signal;
encode the latent variables; and
encode model parameters for the plurality of processing models.

6. The method of claim 1 or 4, or the apparatus of claim 2 or 5, wherein a processing model corresponds to a synthesis model or an upsampling model.

7. The method of claim 4 or 6, wherein a processing model corresponds to a synthesis model, further comprising, or the apparatus of claim 5 or 6, wherein the one or more processors are further configured to perform:

for each partition of the plurality of partitions:
encoding information indicating association of the partition to a respective upsampling model of a plurality of upsampling models; and
encoding model parameters for the plurality of upsampling models.

8. The method of any one of claims 3, 6 and 7, or the apparatus of any one of claims 3, 6 and 7, where a number of upsampling models in the plurality of upsampling models is different from a number of synthesis models in the plurality of synthesis models.

9. The method of any one of claims 1, 3, 4, and 6-8, or the apparatus of any one of claims 2, 3 and 5-8, wherein the plurality of partitions are classified into Q groups, wherein each group is associated with a same upsampling model.

10. The method of any one of claims 1, 3, 4 and 6-9, or the apparatus of any one of claims 2, 3 and 5-9, wherein the plurality of partitions are classified into P groups, wherein each group is associated with a same synthesis model.

11. The method of any one of claims 1, 3, 4, and 6-10, or the apparatus of any one of claims 2, 3 and 5-10, wherein the association of the partition to the respective processing model of the plurality of processing models is based on a size of the partition.

12. The method of any one of claims 1, 3, 4 and 6-11, or the apparatus of any one of claims 2, 3 and 5-11, wherein the signal is an image or a portion of an image.

13. The method of any one of claims 1, 3, 4 and 6-12, or the apparatus of any one of claims 2, 3 and 5-12, wherein the synthesis model corresponds to an INR (Implicit Neural Representation) network or to a part of the INR network.

14. The method of any one of claims 1, 3, 4 and 6-13, or the apparatus of any one of claims 2, 3 and 5-13, wherein a first processing model and a second processing model, of the plurality of processing models, differ in at least one of an architecture and model parameters.

15. A computer readable storage medium having stored thereon instructions for encoding or decoding a signal according to the method of any one of claims 1, 3, 4 and 6-14.

RF
COMP
USB
HDMI
105

PROCESSOR 110

115

ENCODER/
DECODER 130

MEMORY 120

STORAGE
DEVICE 140

COMMUNICATION
INTERFACE 150

DISPLAY
INTERFACE 160

AUDIO
INTERFACE 170

PERIPHERAL
INTERFACE 180

DISPLAY
DEVICE 165

AUDIO
DEVICE 175

PERIPHERALS 185

100

190

COMMUNICATION CHANNEL

**FIG. 1**

FIG. 2

INPUT DATA ~310

320

INR-BASED ENCODER

330

QUANTIZER

340

ENTROPY-BASED ENCODER

BITSREAM ~350

**FIG. 3**

300

---

BITSTREAM ~410

420

ENTROPY-BASED DECODER

430

DEQUANTIZER

440

INR-BASED DECODER

RECONSTRUCTED DATA ~450

**FIG. 4**

400

510 DATA COORDINATES

520 MAPPING UNIT

525 LATENT VARIABLES

530 UP-SAMPLING UNIT

535 UPSAMPLED LATENT VARIABLES

540 INR NETWORK

550 RECONSTRUCTED DATA

500

**FIG. 5**

**FIG. 6**

**FIG. 7**

EP 4 787 230 A1

FIG. 8

**FIG. 9**

**FIG. 10**

FIG. 11A

**FIG. 11B**

EP 4 787 230 A1

SYNTHESIS
ASSOCIATION INFO.

1150

1152

1154

1156

1148

GATHER LATENT
VARIABLES FOR
SYNTHESIS
NETWORK 0

SYNTHESIS
MODEL $S_0$

GATHER LATENT
VARIABLES FOR
SYNTHESIS
NETWORK 1

SYNTHESIS
MODEL $S_1$

REARRANGE
DATA

1160

RECONSTRUCTED
IMAGE

GATHER LATENT
VARIABLES FOR
SYNTHESIS
NETWORK P-1

SYNTHESIS
MODEL $S_{P-1}$

SYNTHESIS NETWORK
PARAMETERS

**FIG. 11C**

1200

```
                    ┌─────────────────────────────────┐  1210
                    │       PARTITION THE SIGNAL        │
                    └─────────────────────────────────┘
                                    │
                                    ▼
                    ┌─────────────────────────────────┐  1220
                    │   ASSOCIATE UPSAMPLING AND/OR     │
                    │   SYNTHESIS MODEL TO EACH PART    │
                    │         OF THE SIGNAL             │
                    └─────────────────────────────────┘
                                    │
                                    ▼
                    ┌─────────────────────────────────┐  1230
                    │      TRAIN HYBRID INR MODEL       │
                    └─────────────────────────────────┘
                                    │
                                    ▼
                    ┌─────────────────────────────────┐  1240
                    │  CODE, INTO THE BITSTREAM,         │
                    │  PARAMETERS OF UPSAMPLING,         │
                    │  SYNTHESIS AND/OR OTHER NETWORKS   │
                    └─────────────────────────────────┘
                                    │
                                    ▼
                    ┌─────────────────────────────────┐  1250
                    │  CODE, INTO THE BITSTREAM,         │
                    │  LATENT VARIABLES BASED ON THE     │
                    │  DETERMINED DISTRIBUTIONS          │
                    └─────────────────────────────────┘
                                    │
                                    ▼
                    ┌─────────────────────────────────┐  1260
                    │  CODE, INTO THE BITSTREAM, SIGNAL  │
                    │  PARTITIONING INFO AND ASSOCIATION │
                    │  BETWEEN SIGNAL PARTS AND          │
                    │  UPSAMPLING AND/OR SYNTHESIS       │
                    │  NETWORKS                          │
                    └─────────────────────────────────┘
```

**FIG. 12**

DECODE, FROM THE BITSTREAM, SIGNAL PARTITIONING INFO AND ASSOCIATION BETWEEN SIGNAL PARTS AND UPSAMPLING AND/OR SYNTHESIS NETWORKS — 1310

DECODE, FROM THE BITSTREAM, PARAMETERS OF THE UPSAMPLING AND/OR SYNTHESIS AND/OR OTHER NETWORKS — 1320

DECODE, FROM THE BITSTREAM, LATENT VARIABLES BASED ON THE DETERMINED DISTRIBUTIONS — 1330

FOR EACH CODING UNIT, UPSAMPLE THE LATENT VARIABLES USING THE ASSOCIATED UPSAMPLING NETWORK — 1340

CONCATENATE LATENT VARIABLES — 1350

FOR EACH CODING UNIT, PRODUCE, BY THE ASSOCIATED SYNTHESIS NETWORK, THE DATA REGION FROM THE UPSAMPLED LATENT VARIABLES IN THAT CODING UNIT — 1360

**FIG. 13**

FIG. 14

# EUROPEAN SEARCH REPORT

**Application Number**

EP 25 30 5121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/126769 A1 (INTERDIGITAL VC HOLDINGS INC [US]) 24 June 2021 (2021-06-24) * paragraph [0050] * * paragraph [0056] - paragraph [0067]; figure 6 * * paragraph [0090]; figure 17 * * paragraph [0098] - paragraph [0099]; figures 21, 22 * * paragraph [0105] * ----- | 1,2,4,5, 15 | INV. G06N3/045 G06T9/00 H04N19/176 H04N19/46 H04N19/96 |
| X | WO 2024/256206 A1 (INTERDIGITAL CE PATENT HOLDINGS SAS [FR]) 19 December 2024 (2024-12-19) * page 24, line 30 - page 26, line 1; figure 8 * * page 21, line 2 - page 22, line 8; figure 6 * ----- | 1,2,4,5, 15 | |
| Y | WO 2024/184044 A1 (INTERDIGITAL CE PATENT HOLDINGS SAS [FR]) 12 September 2024 (2024-09-12) * paragraph [0036]; figure 4 * * paragraph [0040] - paragraph [0049]; figures 6, 7, 8 * * paragraph [0050] - paragraph [0065]; figure 9 * ----- -/-- | 1-10, 12-15 | **TECHNICAL FIELDS SEARCHED (IPC)** G06N G06T H04N |

The present search report has been drawn up for all claims

| Place of search | Date of completion of the search | Examiner |
|---|---|---|
| Munich | 24 June 2025 | Morawski, Igor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

page 1 of 4

## EUROPEAN SEARCH REPORT

**Application Number**

EP 25 30 5121

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | LADUNE THEO ET AL: "COOL-CHIC: Coordinate-based Low Complexity Hierarchical Image Codec", 2023 IEEE/CVF INTERNATIONAL CONFERENCE ON COMPUTER VISION (ICCV), IEEE, 1 October 2023 (2023-10-01), pages 13469-13476, XP034515564, DOI: 10.1109/ICCV51070.2023.01243 [retrieved on 2024-01-15] * abstract * * Sec. 2; figures 1, 2, 3 * ----- | 1-8, 12-15 | |
| Y,D | LEGUAY THOMAS ET AL: "Cool-chic video: Learned video coding with 800 parameters", 2024 DATA COMPRESSION CONFERENCE (DCC), IEEE, 19 March 2024 (2024-03-19), pages 23-32, XP034607827, DOI: 10.1109/DCC58796.2024.00010 [retrieved on 2024-05-21] * abstract * * Sec. 1, Sec. 2; figures 1, 2, 3 * ----- | 1-8, 12-15 | **TECHNICAL FIELDS SEARCHED (IPC)** |
| Y,D | KIM HYUNJIK ET AL: "C3: High-Performance and Low-Complexity Neural Compression from a Single Image or Video", 2024 IEEE/CVF CONFERENCE ON COMPUTER VISION AND PATTERN RECOGNITION (CVPR), IEEE, 16 June 2024 (2024-06-16), pages 9347-9358, XP034694852, DOI: 10.1109/CVPR52733.2024.00893 [retrieved on 2024-09-16] * Sec. 2, Sec. 3; figure 2 * * abstract * ----- -/-- | 1,2,4,5, 12,13,15 | |

The present search report has been drawn up for all claims

| Place of search | Date of completion of the search | Examiner |
|---|---|---|
| Munich | 24 June 2025 | Morawski, Igor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 2 of 4

Europäisches
Patentamt

European
Patent Office

Office européen
des brevets

**EUROPEAN SEARCH REPORT**

Application Number

EP 25 30 5121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Ben-Shabat Yizhak ET AL: "Neural Experts: Mixture of Experts for Implicit Neural Representations", arXiv.org, 29 October 2024 (2024-10-29), pages 1-23, XP093287951, DOI: https://doi.org/10.48550/arXiv.2410.21643 Retrieved from the Internet: URL:https://arxiv.org/pdf/2410.21643 * figure 1 * * abstract * * Sec. 3 * ----- | 9,10,14 | |
| T | Srihari Sargur N: "Machine Learning Basics: Capacity, Over-and Under-fitting", , 9 December 2017 (2017-12-09), pages 1-30, XP093289115, Retrieved from the Internet: URL:https://web.archive.org/web/2017120906 4635/https://cedar.buffalo.edu/~srihari/CS E676/5.2%20MLBasics-Capacity.pdf * page 11 * ----- | 11 | TECHNICAL FIELDS SEARCHED (IPC) |

-/--

The present search report has been drawn up for all claims

| Place of search | Date of completion of the search | Examiner |
|---|---|---|
| Munich | 24 June 2025 | Morawski, Igor |

EPO FORM 1503 03.82 (P04C01)

Europäisches Patentamt
European Patent Office
Office européen des brevets

**EUROPEAN SEARCH REPORT**

**Application Number**

EP 25 30 5121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | SU HU ET AL: "A review of deep-learning-based super-resolution: From methods to applications", PATTERN RECOGNITION., vol. 157, 1 January 2025 (2025-01-01), page 110935, XP093289121, GB ISSN: 0031-3203, DOI: 10.1016/j.patcog.2024.110935 Retrieved from the Internet: URL:https://pdf.sciencedirectassets.com/272206/1-s2.0-S0031320324X00096/1-s2.0-S0031320324006861/main.pdf?hash=1843b47f96ef4c73993e24146c77b8db62caac70d6d9755d2a41f8c60a53509a&host=68042c943591013ac2b2430a89b270f6af2c76d8dfd086a07176afe7c76c2c61&pii=S0031320324006861&tid=spdf-922ceb49-1de5-4f64-bac5-1e6> * Sec. 4.1 * | 11 | |
| A | YUNPENG BAI ET AL: "PS-NeRV: Patch-wise Stylized Neural Representations for Videos", ARXIV.ORG, CORNELL UNIVERSITY LIBRARY, 201 OLIN LIBRARY CORNELL UNIVERSITY ITHACA, NY 14853, 7 August 2022 (2022-08-07), XP091289764, * figures 1, 3, 4 * * Sec. 3 * | 1,2,4,5,15 | TECHNICAL FIELDS SEARCHED (IPC) |
| A | US 2023/396801 A1 (RACAPE FABIEN [US] ET AL) 7 December 2023 (2023-12-07) * paragraph [0067]; figure 4 * | 1,2,4,5,15 | |

The present search report has been drawn up for all claims

| Place of search | Date of completion of the search | Examiner |
|---|---|---|
| Munich | 24 June 2025 | Morawski, Igor |

EPO FORM 1503 03.82 (P04C01)

## ANNEX TO THE EUROPEAN SEARCH REPORT
## ON EUROPEAN PATENT APPLICATION NO.

EP 25 30 5121

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2025

| Patent document cited in search report | | Publication date | Patent family member(s) | | Publication date |
|---|---|---|---|---|---|
| WO 2021126769 | A1 | 24-06-2021 | CN | 114788292 A | 22-07-2022 |
| | | | EP | 4078979 A1 | 26-10-2022 |
| | | | KR | 20220112783 A | 11-08-2022 |
| | | | US | 2022385949 A1 | 01-12-2022 |
| | | | WO | 2021126769 A1 | 24-06-2021 |
| WO 2024256206 | A1 | 19-12-2024 | NONE | | |
| WO 2024184044 | A1 | 12-09-2024 | NONE | | |
| US 2023396801 | A1 | 07-12-2023 | CN | 116457793 A | 18-07-2023 |
| | | | EP | 4241450 A1 | 13-09-2023 |
| | | | US | 2023396801 A1 | 07-12-2023 |
| | | | WO | 2022098727 A1 | 12-05-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23305282

**Non-patent literature cited in the description**

- **LADUNE et al.** COOL-CHIC: Coordinate-based low complexity hierarchical image codec. *International Conference on Computer Vision (ICCV)*, 2023
- **HYUNJIK et al.** C3: High-Performance and Low-Complexity Neural Compression from a Single Image or Video. *Proceedings of the IEEE/CVF Conference on Computer Vision and Pattern Recognition (CVPR)*, 2024, 9347-9358
- Cool-chic video: Learned video coding with 800 parameters. **LEGUAY et al.** Data Compression Conference (DCC) 2024. IEEE, 2024, 23-32